# EUROPEAN PATENT APPLICATION

(11) **EP 2 986 012 A1**
(43) Date of publication of application: **17.02.2016**
(21) Application number: 14181033.3
(22) Date of filing: 14.08.2014
(51) Int. Cl.: H04N 21/41, H04N 21/422, H04N 21/6587, G06F 9/44

(54) **Controlling content on a display device**

(71) Applicant: mFabrik Holding Oy, 00531 Helsinki (FI)
(72) Inventor: Hyyrynen, Ville, 00350 Helsinki (FI)
(74) Representative: Papula Oy

(57) **Abstract**

According one aspect, there is provided a method for controlling content on a display device. The method comprises associating, with a server, an identifier with the display device; receiving, with the server, a connection request from a mobile device, the connection request comprising the identifier; associating, with the server, the connection request with the display device identified by the identifier; initiating, with the server, a transport protocol connection session with the mobile device, wherein the session assigns the mobile device control over content displayed on the display device during the transport protocol connection session; receiving, with the server, controlling instructions from the mobile device; and controlling, with the server, the content to be displayed on the display device in response to the controlling instructions received from the mobile device.

## Description

### TECHNICAL FIELD

The present disclosure is directed to a solution for controlling content on a display device. In particular, there is provided a solution for controlling content on the display device remotely.

### BACKGROUND

There exist various solutions for remotely controlling content displayed on an external display device. These solutions include, for example, remote desktop type of solutions where special software is installed at both end devices which then together enable a mobile device to use the end device. This enables, for example, providing support operations remotely via a network connection.

The above described remote control solution is applicable as long as it is possible to install the necessary software at both ends. New challenges appear when the need to remotely control content on an external display device is temporary, the controlling device is a portable electronic device and when a user has access only to his portable electronic device.

### SUMMARY

According to one aspect there is provided a method for controlling content on a display device. The method comprises associating, with a server, an identifier with the display device; receiving, with the server, a connection request from a mobile device, the connection request comprising the identifier; associating, with the server, the connection request with the display device identified by the identifier; initiating, with the server, a transport protocol connection session with the mobile device, wherein the session assigns the mobile device control over content displayed on the display device during the transport protocol connection session; receiving, with the server, controlling instructions from the mobile device; and controlling, with the server, the content on to be displayed the display device in response to the controlling instructions received from the mobile device.

In one example, the initiating comprises transmitting to the mobile device information content needed for providing a graphical control user interface with the mobile device for controlling the content displayed on the display device.

In a further example, the method further comprises transmitting to the mobile device information content providing a new graphical user interface in response to a selection of an item on the current graphical user interface during the session.

In a further example, the initiating comprises establishing a WebSocket connection between the server and the mobile device.

In a further example, the identifier is a single-use identifier.

According to another aspect there is provided an apparatus for controlling content on a display device. The apparatus comprises at least one processing unit; and at least one memory connected to the at least one processing unit, wherein the at least one memory comprises program code, which when executed by the at least one processing unit, causes the apparatus to: associating an identifier with the display device; receive a connection request from a mobile device, the connection request comprising the identifier; associate the connection request with the display device identified by the identifier; initiate a transport protocol connection session with the mobile device, wherein the session assigns the mobile device control over content displayed on the display device during the transport protocol connection session; receive controlling instructions from the mobile device; and control the content to be displayed on the display device in response to the controlling instructions received from the mobile device.

In one example, the at least one memory comprises program code, which when executed by the at least one processing unit, causes the apparatus to transmit to the mobile device information content needed for providing a graphical control user interface with the mobile device for controlling the content displayed on the display device.

In a further example, the at least one memory comprises program code, which when executed by the at least one processing unit, causes the apparatus to: transmit to the mobile device information content providing a new graphical user interface in response to a selection of an item on the current graphical user interface during the session.

In a further example, the at least one memory comprises program code, which when executed by the at least one processing unit, causes the apparatus to establish a WebSocket connection between the server and the mobile device when initiating the transport protocol connection session with the mobile device.

In a further example, the display device is an integral element of the apparatus.

In a further example, the identifier is a single-use identifier.

According to another aspect there is provided a computer program comprise program code instructions, which when executed by an apparatus, perform at least the following: associating an identifier with the display device; receiving a connection request from a mobile device, the connection request comprising the identifier; associating the connection request with the display device identified by the identifier; initiating a transport protocol connection session with the mobile device, wherein the session assigns the mobile device control over content displayed on the display device during the transport protocol connection session; receiving controlling instructions from the mobile device; and controlling the content to be displayed on the display device in response to the controlling instructions received from the mobile device.

In one example the computer program is embodied on a computer-readable medium.

According to another aspect there is provided a system for controlling content on a display device. The system comprises a display arrangement comprising a display device configured to display content, a control unit configured to control the content to be displayed by the display device based on data received by the display arrangement, and a data transmission unit configured to for enable data communication. The system also comprises a server system configured to transmit controlling instructions to the display arrangement to associate an identifier with the display device; receive a connection request from a mobile device, the connection request comprising the identifier; associate the connection request with the display device identified by the identifier; initiate a transport protocol connection session with the mobile device, wherein the session assigns the mobile device control over content displayed on the display device during the transport protocol connection session; receive controlling instructions from the mobile device; and transmit controlling instructions to the display arrangement to control the content to be displayed on the display device in response to the controlling instructions received from the mobile device.

### BRIEF DESCRIPTION OF THE DRAWINGS:

The accompanying drawings, which are included to provide a further understanding and constitute a part of this specification, illustrate various embodiments and together with the description help to explain the principles. In the drawings:
**Figure 1** is a flow diagram illustrating a method for controlling content on a display device according to one example embodiment,
**Figure 2A** is a block diagram illustrating a server system according to one example embodiment,
**Figure 2B** is a block diagram illustrating a server system according to another example embodiment, and
**Figures 3A - 3E** illustrate views displayed by a display device and a mobile device according to one example embodiment.

### DETAILED DESCRIPTION

Reference will now be made in detail to the embodiments, examples of which are illustrated in the accompanying drawings.

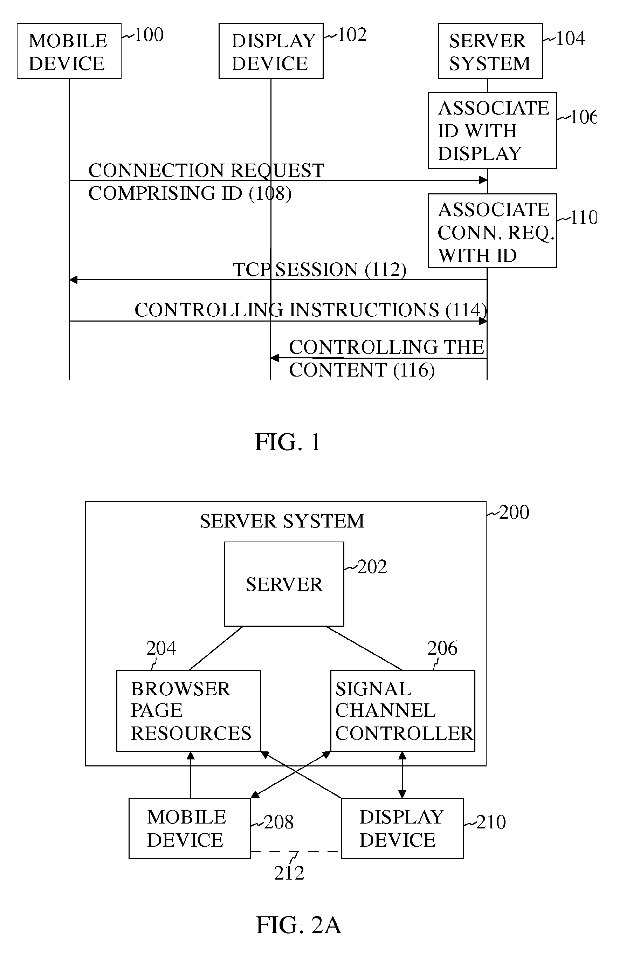

Figure 1 is a flow diagram illustrating a method for controlling content on a display device according to one example embodiment. The Figure 1 example comprises three functional entities, a mobile device 100, a display device 102 and a server system 104. The server system 104 generates content that is to be displayed by the display device 102. The display device 102 may be directly connected to the server system 104 or it may be reachable by the server system 104 via a network connection. If the display device 102 is a remote display, the display device 102 may comprise software for controlling the display device 102 to display information on the display and means for receiving/transmitting data (for example, a network connection to the Internet). The server system 104 refers, for example, to a computer running at least one server application.

The server system 104 associates an identifier with the display device (at 106). This means that the identifier identifies a specific display device. The associated identifier is arranged to be accessible to the mobile device or to the user of the mobile device. The server system 104 may cause the display device 102 to display information that includes the identifier. For example, the display device 102 may display a network address and the identifier may be part of the network address. Alternatively, the display device 102 may display a QR code and the identifier has been coded into the QR code. Another possibility is to use a Near Field Communication (NFC) chip and the identifier is coded into the chip.

The mobile device 100 is a portable electronic device carried by the user, and the mobile device has a transceiver having wireless data communication capabilities. The wireless data communication capabilities may refer, for example, to a Wireless Local Area Network (WLAN) transceiver or to a transceiver connecting the portable mobile device to a mobile communication network. The mobile device 100 is, for example, a cellular telephone, a smart phone, a tablet computer etc.

The user uses the mobile device 100 to initiate a connection request 108 towards the server system 104 via the transceiver, the connection request comprising the identifier. The connection request may result from the user of the mobile device 100 inputting a network address to a web browser, where the network address was displayed by the display device 102. As indicated above, the identifier may be part of the network address. In another example, the identifier may be a parameter (for example, a POST parameter) relating to the connection request. In another example, the connection request may result from the mobile device 100 scanning a QR code or from NFC information exchange include in the display device 102 or being external to the display device 102.

The server system 104 receives the connection request 108 and associates the connection request from the mobile device 100 with the identifier (at 110). In other words, the server system 104 links together a specific connection request from the mobile device 100 and a specific display device 102. In response to the connection request 108, a Transmission Control Protocol (TCP) session is established (at 112) between the server system 104 and the mobile device 100. The established session assigns the mobile device 100 control over content displayed on the display device 102 during the TCP session. In a further example, a WebSocket connection is established once the TCP session has been established if both the mobile device 100 and the server system 104 support.

In one example, when establishing the TCP session 112, the server system 104 sends to the mobile device 100 information content needed for providing a graphical control user interface with the mobile device for controlling the content displayed on the display device 102. The server system 104 sends, for example, JavaScript based code to the mobile device 100 and other information needed to control the content displayed by the display device 102. The mobile device 100 may be any device that comprises a web browser, which shows the graphical control user interface as a web page and has data transmission capabilities. The application providing the graphical user interface may also be any application that is able to provide a graphical user interface and has data transmission capabilities.

When the session has been established, the server system 104 receives controlling instructions from the mobile device 100 (at 114), and the server system 104 controls content (at 116) to be displayed on the display device 102 based on the control instructions received from the mobile device 100. When a WebSocket connection is used, the delay between sending the controlling instructions by the mobile device 100 and seeing the response on the display device 102 is negligible, in other words, typically less than 100ms.

The server system 104 comprises, for example, a server computer which runs one or more a server applications. The server system 104 may be able to handle requests from multiple mobile devices and to control multiple display devices based on the requests.

The identifier described above may be a single-use identifier. This makes it possible to separate connection requests that the server system receives from different mobile devices. In other words, in one example, each connection request from mobile device comprises a different identifier. In another example, the identifier may be a unique identifier, and it may be valid only for a certain period of time. The idenfier may be generated using any appropriate existing hardware and/or software technology.

Figure 2A is a block diagram illustrating signalling connections between various entities according to one example embodiment. A server system 200 comprises an application server 202 which controls content displayed by a display device 210. A signal channel controller 206 controls the communication to/from the display device 210 and a mobile device 208. The mobile device 208 and the display device 210 are so located that the user of the mobile device 208 is able to view content displayed by the display device 210.

Browser page resources 204 refers, for example, to an entity in the server system 200 that may implement functions relating to a Hypertext Transfer Protocol (HTTP) or Hypertext Transfer Protocol Secure (HTTPS) server. The browser page resources 204 and the signal channel controller 206 are both controlled by the server 200. The browser page resources 204 may be implemented as an ordinary web server which serves HTTP requests (for example, HTTP/1.1 http://www.w3.org/Protocols/rfc2616/rfc2616.html) to user agents (for example, browser applications). The browser page resources 204 may also serve XMLHttpRequests requests (http://www.w3.org/TR/XMLHttpRequest/).

The resources requested from the browser page resources 204 may be web page resources such as Hypertext Markup Language (HTML), JavaScript (JS), Cascading Style Sheets (CSS), media files (video, audio, image files) etc.

The signal channel controller 206 is used to establish a two-way connection used for signalling events that enable the interaction 212 between the display device 210 and the user of the mobile device 208. The signal channel controller 206 may use a WebSocket connection initiated by one of the JavaScript resources loaded from the browser page resources 204, or it can use some other scheme, such as polling, to enable two-way communication. The signals passed through the signal channel controller 206 follow a protocol that is specific to the application running on the server 202, and conceptually it can be considered as separate layer on top of the web content. This means the display device 210 can also respond to events originating from some other source, such as a pointer device, a touch screen, or other mechanism. In other words, the signals in 212 can emulate for example click events, so the display device can also be used with a mouse.

A dashed line 212 indicates that there is interaction between the mobile device 208 and the display device 210. The interaction means that the view on the display device 210 may be controlled by the mobile device 208.

The mobile device 208 is, for example, a portable electronic device which has wireless communication capabilities. The wireless communication capabilities may refer, for example, to a Wireless Local Area Network (WLAN) transceiver or to a transceiver connecting the portable mobile device to a mobile communication network.

The server system 200 and the display device 210 may be integrated into a single entity. Alternatively, the server system 200 and the display device 210 may be geographically distributed and the connection between them may be arranged, for example, via the Internet.

In the example of Figure 2A the server system 200 and the display device 210 are arranged into a single geographical location. Since the needed server equipment and software are commonly available, there is no need to invest in special equipment and software. Further, since the display device 210 can be any display device (for example, a monitor, a television etc.), the disclosed solution also makes the implementation inexpensive, simple and easy to implement.

The example of Figure 2A also provides a solution where a temporary and personal interaction between the mobile device 208 and the display device 210 can be easily and effectively established.

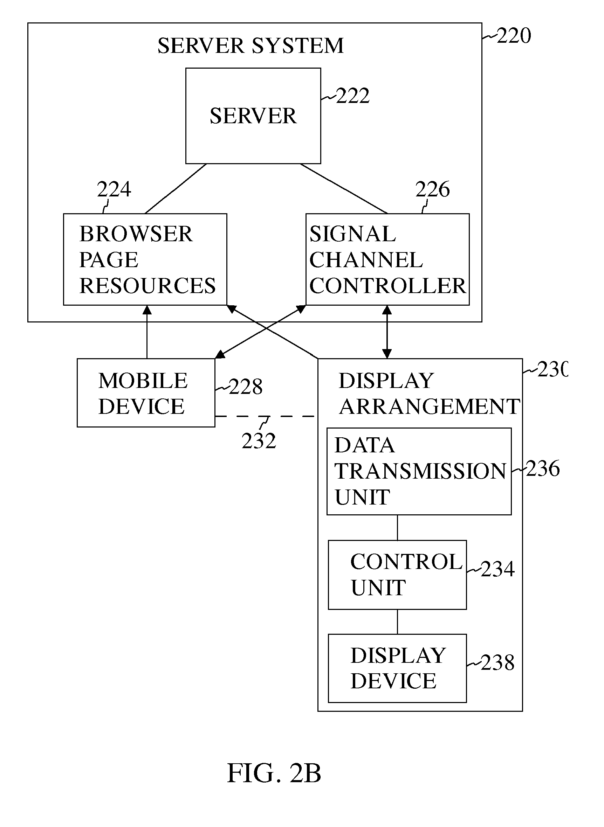

Figure 2B is a block diagram illustrating signalling connections between various entities according to one example embodiment.

The server system 220 comprises an application server 222 which controls content displayed by a display device 238 of a display arrangement 230. A signal channel controller 226 controls the communication to/from the display arrangement 208 and a mobile device 228. The mobile device 228 and the display device 238 are so located that the user of the mobile device 228 is able to view content displayed by the display device 238.

Browser page resources 224 refers, for example, to an entity in the server system 220 that may implement functions relating to a Hypertext Transfer Protocol (HTTP) or Hypertext Transfer Protocol Secure (HTTPS) server. The browser page resources 224 and the signal channel controller 226 are both controlled by the server 222. The browser page resources 224 may be implemented as an ordinary web server which serves HTTP requests (e.g. HTTP/1.1 http://www.w3.org/Protocols/rfc2616/rfc2616.html) to user agents (for example, browser applications). The browser page resources 224 may also serve XMLHttpRequests requests (http://www.w3.org/TR/XMLHttpRequest/).

The resources requested from the browser page resources 224 may be web page resources such as Hypertext Markup Language (HTML), JavaScript (JS), Cascading Style Sheets (CSS), media files (video, audio, image files) etc. The signal channel controller 226 is used to establish a two-way connection used for signalling events that enable the interaction 232 between a display device 238 and the user of a mobile device 228. The signal channel controller 226 may use a WebSocket connection initiated by one of the JavaScript resources loaded from the browser page resources 224, or it can use some other scheme, such as polling, to enable two-way communication. The signals passed through the signal channel controller 226 follow a protocol that is specific to the application running on the server 222, and conceptually it can be considered as separate layer on top of the web content. This means the display device 238 can also respond to events originating from some other source, such as a pointer device, a touch screen, or other mechanism. In other words, the signals in 232 can emulate for example click events, so the display device can also be used with a mouse.

A dashed line 232 indicates that there is interaction between the mobile device 228 and the display device 238. The interaction means that the view on the display device 238 is controlled by the mobile device 228.

The mobile device 228 is, for example, a portable electronic device which has wireless communication capabilities. The wireless communication capabilities may refer, for example, to a Wireless Local Area Network (WLAN) transceiver or to a transceiver connecting the portable mobile device to a mobile communication network.

In this example, the display arrangement 230 is a separate entity which receives controlling instructions from the server system 222 via a data communication network, for example, the Internet. A data transmission unit 236 in the display arrangement 230 is configured to receive the controlling instructions from the server system 222. A control unit 234 is configured to control the content to be displayed by the display device 238 based on data received by the data transmission unit 236.

In the example of Figure 2B the server system 220 and the display arrangement 238 are arranged geographically to different locations. This enables a solution where any device having a display device or connected to the display device (for example, a monitor, a television etc.) and having a control unit and data transmission capabilities (for example, via the Internet) can be changed to an interactive unit which a user is able to control with this mobile device (for example, a mobile device, a tablet, a mobile phone etc.). This means that there is no need to invest in special and expensive display devices or other equipment. The disclosed solution also makes the implementation simple and easy to implement.

The example of Figure 2B also provides a solution where a temporary and personal interaction between the mobile device 228 and the display device 238 can be easily and effectively established.

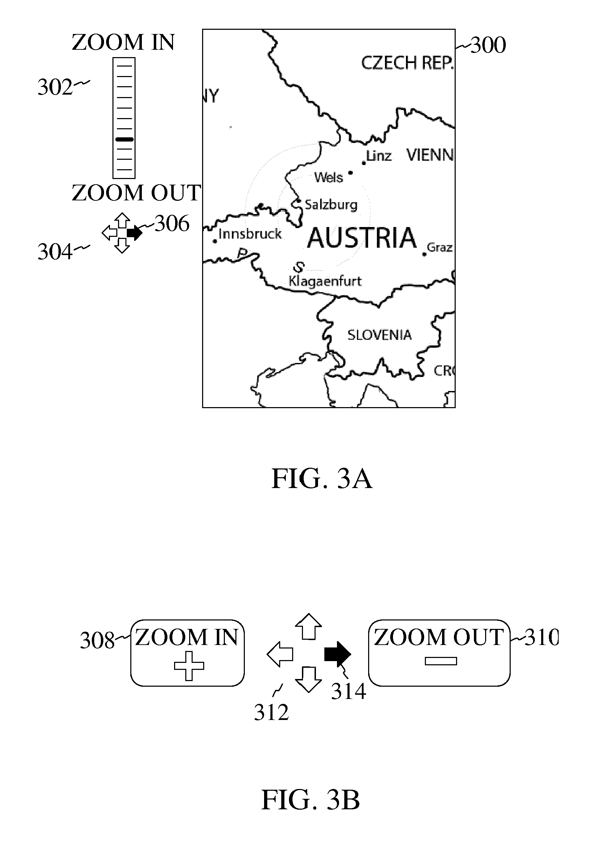

Figures 3A - 3E illustrate views displayed by a display device and a mobile device according to an example embodiment.
Figure 3A illustrates a view on a display device when a user has gained control of the display device with his portable electronic device. In other words, a Transmission Control Protocol (TCP) session has been established between a server system and the portable electronic device. The established session assigns the portable electronic device control over content displayed on the display device during the TCP session.
Figure 3A discloses three elements displayed by the display device: 1) a map element 300, 2) a zoom control element 302 and 3) a map manipulation element 304. The zoom control element 302 shows the zooming level of information displayed by the map element 300. The map manipulation element 303 indicates when sideward or vertical movements are performed in the map element 300.
Figure 3B illustrates a view on a display of the portable electronic device when a user has gained control of the display device with the portable electronic device. The view comprises three elements: zoom control elements 308, 310 and a map manipulation element 312. The user wishes to move the view of the map element 300 and selects an arrow 314 of the map manipulation element 314. The user selection causes sending of control instructions from the portable electronic device to a server system controlling the display device to move the view displayed by the map element 300. Further, a corresponding arrow 306 in the map manipulation element 304 may be highlighted to indicate that the user has operated the map manipulation element 312.

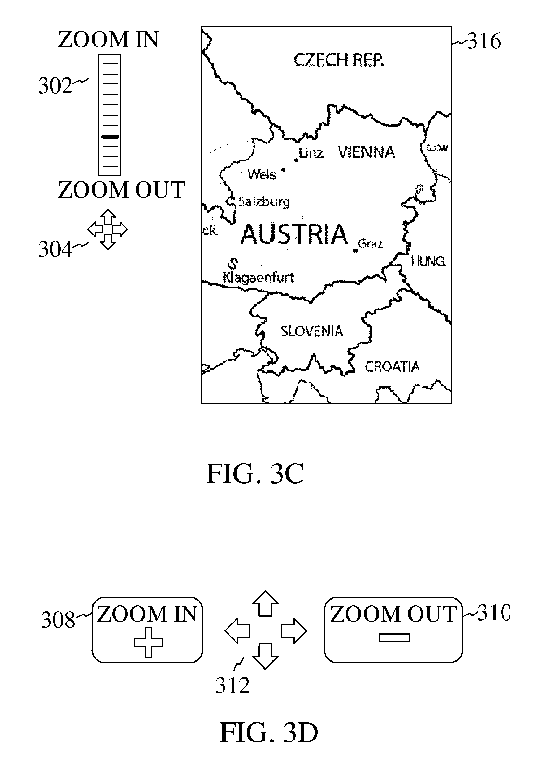

Figure 3C illustrates a view on the display device after the selection of the arrow 314. The zoom control element 302 has remained the same. However, the geographical information on the map element 316 has moved to the direction of the arrow 314. The map manipulation elements 304 and the map manipulation element 312 in Figure 3D do not any more show any selection of the arrow 314.

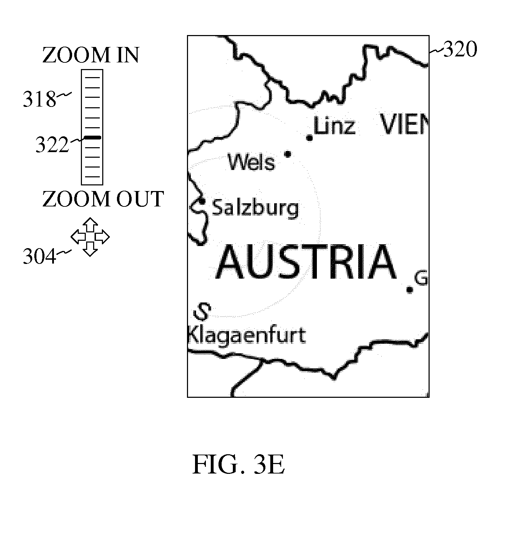

Figure 3E illustrates an example when a user has selected a zoom in button 308 of Figure 3D. The selection of the zoom in button 308 causes sending of control instructions from the portable electronic device to the server system controlling the display device to zoom in content displayed in the map element 316. In response to the selection of the zoom in button 308, the map element 320 shows a more detailed view of the geographical area. The zoom control element 318 also shows the changed zoom factor indicator 322.
Figures 3A-3E illustrate only one possible user interface and usage environment, i.e. a map environment and controlling the map environment with the portable electronic device. Other possible examples include, for example, games, quizzes or any other environment that uses a graphical user interface which can be controlled with the portable electronic device. Further, although Figures 3A-3E only discloses on the graphical user interface of the portable electronic device control element that can be selected, it is also possible to input textual information with the portable electronic device that is then displayed by the display device.

In one example embodiment there is provided an apparatus for controlling content on a display device. The apparatus comprises means for associating an identifier with the display device; means for receiving a connection request from a mobile device, the connection request comprising the identifier; means for associating the connection request with the display device identified by the identifier; means for initiating a transport protocol connection session with the mobile device, wherein the session assigns the mobile device control over content displayed on the display device during the transport protocol connection session; means for receiving controlling instructions from the mobile device; and means for controlling the content to be displayed on the display device in response to the controlling instructions received from the mobile device.

Further, in one example, it is possible that a single device displays information relating to multiple users (i.e. users using different portable electronic devices).

Further, in one example, it is possible that multiple display devices display identical content that can be controlled by multiple portable electronic devices.

Further, in one example, elements shown in the graphical user interface of the portable electronic device may partly or wholly match the elements shown in the graphical user interface of the display device. A selection of an element from the graphical user interface of the portable electronic device may cause a new graphical user interface to be sent to the portable electronic device or a change in the existing graphical user interface, for example, a new button, a new menu or menu item etc.

The example embodiments can include, for example, any suitable servers, workstations, PCs, laptop computers, other devices, and the like, capable of performing the processes of the example embodiments. The devices and subsystems of the example embodiments can communicate with each other using any suitable protocol and can be implemented using one or more programmed computer systems or devices.

It is to be understood that the example embodiments are for example purposes, as many variations of the specific hardware used to implement the example embodiments are possible, as will be appreciated by those skilled in the hardware and/or software art(s). For example, the functionality of one or more of the components of the example embodiments can be implemented via one or more hardware and/or software devices.

The example embodiments can store information relating to various processes described herein. This information can be stored in one or more memories, such as a hard disk, optical disk, magneto-optical disk, RAM, and the like. One or more databases can store the information used to implement the example embodiments. The databases can be organized using data structures (e.g., records, tables, arrays, fields, graphs, trees, lists, and the like) included in one or more memories or storage devices listed herein. The processes described with respect to the example embodiments can include appropriate data structures for storing data collected and/or generated by the processes of the devices and subsystems of the example embodiments in one or more databases.

All or a portion of the example embodiments can be conveniently implemented using one or more general purpose processors, microprocessors, digital signal processors, micro-controllers, and the like, programmed according to the teachings of the example embodiments, as will be appreciated by those skilled in the computer and/or software art(s). Appropriate software can be readily prepared by programmers of ordinary skill based on the teachings of the example embodiments, as will be appreciated by those skilled in the software art. In addition, the example embodiments can be implemented by the preparation of application-specific integrated circuits or by interconnecting an appropriate network of conventional component circuits, as will be appreciated by those skilled in the electrical art(s). Thus, the example embodiments are not limited to any specific combination of hardware and/or software.

Stored on any one or on a combination of computer readable media, the example embodiments can include software for controlling the components of the example embodiments, for driving the components of the example embodiments, for enabling the components of the example embodiments to interact with a human user, and the like. Such software can include, but is not limited to, device drivers, firmware, operating systems, development tools, applications software, and the like. Such computer readable media further can include the computer program product of an embodiment for performing all or a portion (if processing is distributed) of the processing performed in implementing the example embodiments. Moreover, parts of the processing of the example embodiments can be distributed for better performance, reliability, cost, and the like.

As stated above, the components of the example embodiments can include computer readable medium or memories for holding instructions programmed according to the teachings of the present disclosure and for holding data structures, tables, records, and/or other data described herein. Computer readable medium can include any suitable medium that participates in providing instructions to a processor for execution. Such a medium can take many forms, including but not limited to, non-volatile media, volatile media, and the like. Non-volatile media can include, for example, optical or magnetic disks, magneto-optical disks, and the like. Volatile media can include dynamic memories, and the like. Common forms of computer-readable media can include, for example, a floppy disk, a flexible disk, hard disk, magnetic tape, any other suitable magnetic medium, a CD-ROM, CD±R, CD±RW, DVD, DVD-RAM, DVD±RW, DVD±R, HD DVD, HD DVD-R, HD DVD-RW, HD DVD-RAM, Blu-ray Disc, any other suitable optical medium, punch cards, paper tape, optical mark sheets, any other suitable physical medium with patterns of holes or other optically recognizable indicia, a RAM, a PROM, an EPROM, a FLASH-EPROM, any other suitable memory chip or cartridge, or any other suitable medium from which a computer can read.

While there have been shown and described and pointed out fundamental novel features as applied to preferred embodiments thereof, it will be understood that various omissions and substitutions and changes in the form and details of the devices and methods described may be made by those skilled in the art without departing from the spirit of the disclosure. For example, it is expressly intended that all combinations of those elements and/or method steps which perform substantially the same function in substantially the same way to achieve the same results are within the scope of the disclosure. Moreover, it should be recognized that structures and/or elements and/or method steps shown and/or described in connection with any disclosed form or embodiments may be incorporated in any other disclosed or described or suggested form or embodiment as a general matter of design choice. Furthermore, in the claims means-plus-function clauses are intended to cover the structures described herein as performing the recited function and not only structural equivalents, but also equivalent structures.

The applicant hereby discloses in isolation each individual feature described herein and any combination of two or more such features, to the extent that such features or combinations are capable of being carried out based on the present specification as a whole, in the light of the common general knowledge of a person skilled in the art, irrespective of whether such features or combinations of features solve any problems disclosed herein, and without limitation to the scope of the claims. The applicant indicates that the disclosed aspects/embodiments may consist of any such individual feature or combination of features. In view of the foregoing description it will be evident to a person skilled in the art that various modifications may be made within the scope of the disclosure.

## Claims

1. A method for controlling content on a display device, the method comprising:
associating, with a server, an identifier with the display device;
receiving, with the server, a connection request from a mobile device, the connection request comprising the identifier
associating, with the server, the connection request with the display device identified by the identifier;
initiating, with the server, a transport protocol connection session with the mobile device, wherein the session assigns the mobile device control over content displayed on the display device during the transport protocol connection session;
receiving, with the server, controlling instructions from the mobile device; and
controlling, with the server, the content to be displayed on the display device in response to the controlling instructions received from the mobile device.

2. The method according to claim 1, wherein that the initiating comprises:
transmitting to the mobile device information content needed for providing a graphical control user interface with the mobile device for controlling the content displayed on the display device.

3. The method according to claim 1 or 2, further comprising:
transmitting to the mobile device information content providing a new graphical user interface in response to a selection of an item on the current graphical user interface during the session.

4. The method according to any of claims 1 - 3, wherein the initiating comprises establishing a WebSocket connection between the server and the mobile device.

5. The method according to any of claims 1 - 4, wherein the identifier is a single-use identifier.

6. An apparatus for controlling content on a display device, the apparatus comprising:
at least one processing unit; and
at least one memory connected to the at least one processing unit, wherein the at least one memory comprises program code, which when executed by the at least one processing unit, causes the apparatus to:
associate an identifier with the display device;
receive a connection request from a mobile device, the connection request comprising the identifier;
associate the connection request with the display device identified by the identifier;
initiate a transport protocol connection session with the mobile device, wherein the session assigns the mobile device control over content displayed on the display device during the transport protocol connection session;
receive controlling instructions from the mobile device; and
control the content to be displayed on the display device in response to the controlling instructions received from the mobile device.

7. The apparatus according to claim 6, wherein the at least one memory comprises program code, which when executed by the at least one processing unit, causes the apparatus to:
transmit to the mobile device information content needed for providing a graphical control user interface with the mobile device for controlling the content displayed on the display device.

8. The apparatus according to claim 6 or 7, wherein the at least one memory comprises program code, which when executed by the at least one processing unit, causes the apparatus to:
transmit to the mobile device information content providing a new graphical user interface in response to a selection of an item on the current graphical user interface during the session.

9. The apparatus according to any of claims 6 - 8, wherein the at least one memory comprises program code, which when executed by the at least one processing unit, causes the apparatus to establish a WebSocket connection between the server and the mobile device when initiating the transport protocol connection session with the mobile device.

10. The apparatus according to claim 6 - 9, wherein the display device is an integral element of the apparatus.

11. The apparatus according to any of claims 6 - 10, wherein the identifier is a single-use identifier.

12. A computer program comprise program code instructions, which when executed by an apparatus, perform at least the following:
associating an identifier with the display device;
receiving a connection request from a mobile device, the connection request comprising the identifier;
associating the connection request with the display device identified by the identifier;
initiating a transport protocol connection session with the mobile device, wherein the session assigns the mobile device control over content displayed on the display device during the transport protocol connection session;
receiving controlling instructions from the mobile device; and
controlling the content to be displayed on the display device in response to the controlling instructions received from the mobile device.

13. The computer program according to claim 12, being embodied on a computer-readable medium.

14. A system for controlling content on a display device, the system comprising:
a display arrangement comprising
a display device configured to display content;
a control unit configured to control the content to be displayed by the display device based on data received by the display arrangement; and
a data transmission unit configured to for enable data communication;
a server system configured to
transmit controlling instructions to the display arrangement to associate an identifier with the display device;
receive a connection request from a mobile device, the connection request comprising the identifier;
associate the connection request with the display device identified by the identifier;
initiate a transport protocol connection session with the mobile device, wherein the session assigns the mobile device control over content displayed on the display device during the transport protocol connection session;
receive controlling instructions from the mobile device; and
transmit controlling instructions to the display arrangement to control the content to be displayed on the display device in response to the controlling instructions received from the mobile device.
